(19) Europäisches Patentamt
European Patent Office
Office européen des brevets

(11) **EP 3 839 253 B1**

(12) **EUROPÄISCHE PATENTSCHRIFT**

(45) Veröffentlichungstag und Bekanntmachung des Hinweises auf die Patenterteilung:
**11.05.2022   Patentblatt 2022/19**

(21) Anmeldenummer: **20213990.3**

(22) Anmeldetag: **15.12.2020**

(51) Internationale Patentklassifikation (IPC):
**F03D 17/00** *(2016.01)*

(52) Gemeinsame Patentklassifikation (CPC):
**F03D 17/00;** F05B 2260/82; F05B 2260/821;
F05B 2260/8211; F05B 2270/303; F05B 2270/3032;
F05B 2270/335; Y02E 10/72

(54) **VERFAHREN ZUM BESTIMMEN EINER ENERGIEPRODUKTION EINER WINDENERGIEANLAGE**

METHOD FOR DETERMINING THE ENERGY PRODUCTION OF A WIND TURBINE

PROCÉDÉ DE DÉTERMINATION D'UNE PRODUCTION D'ÉNERGIE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2019   DE 102019135588**

(43) Veröffentlichungstag der Anmeldung:
**23.06.2021   Patentblatt 2021/25**

(73) Patentinhaber: **Wobben Properties GmbH**
**26607 Aurich (DE)**

(72) Erfinder:
• **Daboul, Hussam**
**26624 Südbrookmerland (DE)**
• **Enskonatus, Kai**
**26759 Hinte (DE)**
• **Mahmoud, Muhanad**
**26605 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A2- 2 267 305          WO-A1-2019/120404**
**DE-A1-102013 210 090**

EP 3 839 253 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Bestimmen einer für einen Vorhersagezeitraum zu erwartenden Energieproduktion einer Windenergieanlage, insbesondere einer zu erwartenden Jahresenergieproduktion einer Windenergieanlage.

Ob es sich wirtschaftlich lohnt eine Windenergieanlage an einem bestimmten Standort aufzustellen, wird oftmals anhand einer im Vorfeld für diesen Standort berechneten zu erwartenden Jahresenergieproduktion der Windenergieanlage ermittelt.

Die zu erwartende Jahresenergieproduktion der Windenergieanlage wird typischerweise auf Basis eines an diesem Standort über ein Jahr gemessenen Windgeschwindigkeitsverlaufs ermittelt. Es kann aber sein, dass nicht die volle, theoretisch verfügbare Windleistung auch von der Windenergieanlage tatsächlich immer in elektrische Leistung umgesetzt wird. Besonders kommt es vor, dass eine Windenergieanlage bei zu hoher Temperatur abgeregelt werden muss. Das kann zu Abweichungen zwischen der tatsächlichen Jahresenergieproduktion und der vorhergesagten Jahresenergieproduktion führen, die solche Abregelungen nicht berücksichtigt.

Daher kann vorgesehen sein, dass an dem Standort über ein Jahr ein Außentemperaturverlauf gemessen wird, und dass auf Grundlage dessen anhand einer Derating-Kurve entschieden wird, ob zu erwarten ist, dass die Anlagenleistung der Windenergieanlage während dieser Zeit zumindest temporär reduziert wird. Die Windenergieanlage würde dann nicht mit der in dem Moment verfügbaren Leistung betrieben werden.

Ein Verfahren aus dem Stand der Technik, das zum Prognostizieren der Energieausbeute einer Windenergieanlage dient, ist z.B. aus EP 2 267 305 A2 bekannt.

Es hat sich herausgestellt, dass es dennoch zu unerwünscht hohen Abweichungen zwischen der prognostizierten und der tatsächlich erzeugten Energiemenge kommen kann.

Der Erfindung liegt die Aufgabe zugrunde eine Lösung anzugeben, die zumindest eines der vorstehenden Probleme adressiert. Insbesondere soll eine Lösung angegeben werden, mit der in verbesserter Weise für einen Vorhersagezeitraum eine zu erwartende Energieproduktion einer Windenergieanlage bestimmt werden kann. Zumindest soll zu bisher bekannten Lösungen eine alternative Lösung vorgeschlagen werden.

Erfindungsgemäß wird ein Verfahren nach Anspruch 1 vorgeschlagen. Somit wird ein Verfahren zum Bestimmen einer für einen Vorhersagezeitraum zu erwartenden Energieproduktion einer Windenergieanlage, insbesondere einer zu erwartenden Jahresenergieproduktion einer Windenergieanlage, vorgeschlagen.

Eine Windenergieanlage umfasst mehrere Anlagenkomponenten, wie z.B. regelmäßig einen Spinner, einen Generator mit Stator und Rotor, ein Maschinenhaus, einen Turm und ein Elektronik-Modul im Turm, besonders einen Umrichter oder Wechselrichter, um die erzeugte Leistung in das elektrische Versorgungsnetz einzuspeisen.

Wenigstens eine der Anlagenkomponenten wird als thermisch relevante Komponente ausgewählt. Eine solche als thermisch relevant ausgewählte Komponente kann ein Stator und/oder ein elektrodynamischer Rotor eines Generators sein, oder der Generator insgesamt. Ein solcher Generator kann durch eine hohe Betriebstemperatur in seiner Arbeitsweise behindert werden, weil er z.B. als Schutz gegen eine Überhitzung reduziert betrieben werden muss und dadurch weniger Leistung produziert, als er aufgrund des Windes eigentlich könnte. Gleiches gilt für einen Umrichter oder Wechselrichter, der ebenfalls nicht beliebig heiß werden darf und als thermisch relevante Komponente ausgewählt werden kann.

Für den Vorhersagezeitraum werden somit mehrere, zeitlich verteilte Windgeschwindigkeitswerte vorgegeben. Jeder der vorgegebenen Windgeschwindigkeitswerte kann, z.B. anhand eines Zeitstempels, einem unterschiedlichen Zeitpunkt innerhalb des Vorhersagezeitraums zugeordnet werden, oder sie liegen einfach in einer langen Reihe vor. Die vorgegebenen Windgeschwindigkeitswerte können eine Teilmenge von den Windgeschwindigkeitswerten eines zeitlichen Windgeschwindigkeitsverlaufs bilden. Die Windgeschwindigkeitswerte können somit als Windgeschwindigkeitsverlauf vorliegen.

Ein solcher Windgeschwindigkeitsverlauf kann eine Anzahl zuvor gemessener Windgeschwindigkeitswerte umfassen, die interpoliert wurden, um so den Windgeschwindigkeitsverlauf zu bilden. Ein Windgeschwindigkeitswert der vorgegebenen Windgeschwindigkeitswerte kann ein tatsächlich gemessener Windgeschwindigkeitswert oder ein interpolierter Windgeschwindigkeitswert eines solchen Windgeschwindigkeitsverlaufs sein. Ein Windgeschwindigkeitsverlauf kann auch ein für einen Standort simulierter Windgeschwindigkeitsverlauf sein, der beispielsweise mittels einer Klimasimulation berechnet wurde.

Die mehreren vorgegebenen, zeitlich verteilten Windgeschwindigkeitswerte können zueinander zeitlich regelmäßig oder unregelmäßig verteilt sein. Bevorzugt sind die Windgeschwindigkeitswerte jedoch zeitlich gleichmäßig innerhalb des Vorhersagezeitraums verteilt und haben zueinander einen zeitlichen Abstand, der bevorzugt zwischen fünf Minuten und einer Stunde, insbesondere zehn Minuten beträgt. Auch für die Zeitdauer, die zwischen zwei zeitlich benachbarten Windgeschwindigkeitswerten liegt kann eine zu erwartende Energieproduktion berechnet und zum Berechnen der zu erwartenden Energieproduktion für den Vorhersagezeitraum verwendet werden. Um für die Zeitdauer, die zwischen zwei zeitlich benachbarten Windgeschwindigkeitswerten liegt, eine zu erwartende Energieproduktion zu berechnen, kann die für den zeitlich früheren Windgeschwindigkeitswert ermittelte Erwartungsleistung mit dieser Zeitdauer, z.B. zehn Minuten, multipliziert werden. Es können beispielsweise zunächst aus mehreren bestimmten Erwartungsleistungen jeweils einer Zeitdauer zwischen zwei Windgeschwindigkeitswerten zugeordnete zu erwartende Energieproduktionen berechnet werden, aus denen beispielsweise durch Aufsummieren eine zu erwartende Energieproduktion für den Vorhersagezeitraum berechnet wird.

Die wenigstens eine oder die mehreren ausgewählten thermisch relevanten Komponenten können anhand eines vorgegebenen Kriteriums einer Gruppe von thermisch relevanten Komponenten zugeordnet werden. Die übrigen Anlagenkomponenten können insbesondere anhand desselben vorgegebenen Kriteriums einer weiteren Gruppe von thermisch nicht-relevanten Komponenten zugeordnet werden.

Es können für den Vorhersagezeitraum mehrere, zeitlich verteilte Windgeschwindigkeitswerte vorgegeben werden. Bspw. kann der Vorhersagezeitraum ein Jahr betragen und dazu können Windgeschwindigkeitswerte in Zeitintervallen von zehn Minuten für das ganze Jahr vorliegen. Der Vorhersagezeitraum kann neben einem Jahr, aber auch eine kürzere Zeitdauer, z.B. einige Monate, umfassen. Vorzugsweise ist der Vorhersagezeitraum aber so gewählt, dass dieser ein Jahr umfasst. Für dieses Jahr kann dann mit dem Verfahren die zu erwartenden Jahresenergieproduktion (engl. *annual energy production (AEP))* der Windenergieanlage bestimmt werden.

Die Windgeschwindigkeitswerte geben jeweils eine Windgeschwindigkeit wieder. Es kann dazu für jedes Zeitintervall ein Wert einer Windgeschwindigkeit vorgegeben werden. Es kann aber auch ein Verlauf der Windgeschwindigkeit vorgegeben werden, der z.B. auch eine Veränderung der Windgeschwindigkeit innerhalb des Zeitintervalls berücksichtigt. Bei genügend kleinen Zeitintervallen kann aber die Berücksichtigung jeweils eines absoluten Wertes pro Zeitintervall ausreichen.

Es wird in einem Leistungsbestimmungsschritt für einen der Windgeschwindigkeitswerte eine Erwartungsleistung der Windenergieanlage bestimmt. Die Erwartungsleistung bezeichnet diejenige Leistung, die eine Windenergieanlage unter den gegebenen Voraussetzungen, soweit sie berücksichtigt werden, erzeugen bzw. abgeben kann. Besonders ist das diejenige Leistung, die die Windenergieanlage aufgrund der angenommenen Windgeschwindigkeit erzeugen könnte. Die angenommene Windgeschwindigkeit wird durch den betreffenden Windgeschwindigkeitswert vorgegeben. Es könnten aber zusätzlich weitere Größen, wie eine Böigkeit berücksichtigt werden.

Die für diesen Windgeschwindigkeitswert bestimmte Erwartungsleistung kann vorzugsweise über einen Zeitstempel des Windgeschwindigkeitswertes einem Zeitpunkt innerhalb des Vorhersagezeitraums zugeordnet werden und gibt eine von der Windenergieanlage für diesen Windgeschwindigkeitswert als erzeugte Leistung zu erwartende Anlagenleistung an.

Außerdem wird in dem Leistungsbestimmungsschritt zum Bestimmen der Erwartungsleistung von der wenigstens einen thermisch relevanten Komponente eine diesem Windgeschwindigkeitswert zugeordnete Komponententemperatur berücksichtigt. Zum Bestimmen der Erwartungsleistung wird somit wenigstens eine konkrete Komponententemperatur berücksichtigt. Besonders ist dazu vorgesehen, die entsprechende Komponententemperatur konkret zu bestimmen. Sie wird dann zusammen mit der Windgeschwindigkeit berücksichtigt, um die Erwartungsleistung zu bestimmen.

Es liegt also für denselben Zeitpunkt bzw. Zeitabschnitt des Vorhersagezeitraums ein Windgeschwindigkeitswert und eine Komponententemperatur vor, die gemeinsam zum Bestimmen der Erwartungsleistung berücksichtigt werden. Die Komponententemperatur wird individuell ermittelt und die Zuordnung der individuell ermittelten Komponententemperatur zu einem der vorgeben Windgeschwindigkeitswerte kann unter Verwendung eines jeweiligen Zeitstempels erfolgen.

Besonders kann über die konkrete Komponententemperatur ein thermisch notwendiges Abregeln der Anlage berücksichtigt werden, ohne dass aber ein zu frühes Abregeln angenommen wird. Bspw. kann der Generator zu heiß geworden sein und muss dann gedrosselt betrieben werden, um einem weiteren Anstieg der Generatortemperatur entgegenzuwirken. Es kann dabei eine Verbesserung gegenüber bekannten Verfahren erreicht werden, die regelmäßig lediglich die Außentemperatur berücksichtigen und davon abhängig auf ein Abregeln schließen.

Bei dem vorgeschlagenen Verfahren geht es somit besonders darum, dass eine Jahresenergieproduktion einer aufzustellenden Windenergieanlage abgeschätzt wird. Dazu wird zunächst der Aufstellungsort ausgemessen und es wird ermittelt, welche Windgeschwindigkeiten über das Jahr verteilt zu erwarten sind. Diese werden als Windgeschwindigkeitswerte in einem Windgeschwindigkeitsverlauf für eine Simulation der aufzustellenden Windenergieanlage zusammengestellt. In gleichem Maße kann ein Verlauf der Außentemperatur, also der Umgebungstemperatur, als Temperaturverlauf zusammengestellt werden. Vorzugsweise wird mit diesen beiden Verläufen die aufzustellende Windenergieanlage simuliert.

Dabei wird berücksichtigt, dass thermisch relevante Komponenten zu heiß werden können. Das hängt von der erzeugten Anlagenleistung, und damit von der jeweiligen Windgeschwindigkeit ab, sowie regelmäßig auch von der Außentemperatur. Entsprechend wird in der Simulation berücksichtigt, dass Situationen auftreten können, in denen die Anlage abgeregelt wird. Es wurde aber erkannt, dass eine pauschale Berücksichtigung dieser beiden Werte allein, also der jeweils aktuellen Anlagenleistung und der jeweils aktuellen Windgeschwindigkeit, ungenau sein kann.

In der Realität, wenn die so geplante Anlage dann also aufgestellt ist und betrieben wird, erfolgt eine Abregelung der Anlage natürlich in Abhängigkeit konkret gemessener Temperaturen, nämlich an den jeweiligen Anlagekomponenten, die evtl. vor Überhitzung geschützt werden müssen. Es wurde nun erkannt, dass es vorteilhaft sein kann solche Temperaturen in der Simulation konkret zu berücksichtigen.

Es können in diesem Sinne aber auch Abschätzungen zu bereits aufgestellten Windenergieanlagen gemacht werden, um bspw. ein Potential einer Verbesserung abzuschätzen. Es können auch andere, kürzere oder längere Zeiträume berücksichtigt werden.

Bei bekannten Verfahren wird häufig aus der Windgeschwindigkeit eine Erwartungsleistung berechnet und anhand einer so genannten Derating-Kurve entschieden, ob die Windenergieanlage abgeregelt werden würde oder nicht. Die Derating-Kurve einer Windenergieanlage beschreibt die maximal zulässige Anlagenleistung in Abhängigkeit von einer bestimmten Außentemperatur. Die Derating-Kurve beruht im Grunde auf Erfahrungswerten.

Es wurde erkannt, dass die Annahme einer Abregelung einer Windenergieanlage anhand einer Derating-Kurve oftmals zu zurückhaltend ist, sodass von einer Abregelung der Windenergieanlage ausgegangen wird, obwohl diese in der Realität tatsächlich nicht erfolgen würde. Es hat sich herausgestellt, dass insbesondere bei höheren Außentemperaturen die Annahme einer Abregelung anhand einer Derating-Kurve der Windenergieanlage vergleichsweise ungenau ist.

Die Ungenauigkeit rührt daher, dass regelmäßig anhand einer Derating-Kurve einer Windenergieanlage angenommen wird, dass eine Anlagenkomponente zu heiß wird, obwohl das nicht der Fall ist.

Eine Überschätzung der Komponententemperatur einer Anlagenkomponente führt regelmäßig dazu, dass die Windenergieanlage aufgrund einer vermeintlich zu hohen Komponententemperatur einer Anlagenkomponente öfter als abgeregelt angenommen wird, als dies tatsächlich der Fall wäre. Entsprechend liegt dann eine für einen Vorhersagezeitraum zu erwartende Energieproduktion einer Windenergieanlage unterhalb einer für diesen Vorhersagezeitraum tatsächlich möglichen Energieproduktion. Aufgrund der mittels einer Derating-Kurve einer Windenergieanlage regelmäßig zu hoch abgeschätzten Komponententemperatur einer Anlagenkomponente und damit den zu hoch angesetzten thermisch bedingten Leistungsverlusten der Windenergieanlage, wird eine zu erwartende Energieproduktion der Windenergieanlage oftmals unterschätzt und somit zu konservativ angegeben. Dies kann dazu führen, dass ein Standort für einen Windpark als nicht wirtschaftlich bewertet wird, obwohl der Standort tatsächlich wirtschaftlich geeignet ist. Es kann auch dazu führen, dass Kühlmittel oder Kühlmaßnahmen vorgeschlagen werden, die aber dann tatsächlich doch nicht oder nicht in dem Maße nötig waren.

Mit dem vorgeschlagenen Verfahren wird somit eine verbesserte und insbesondere realistischere Bestimmung einer Erwartungsleistung einer Windenergieanlage erreicht.

Bevorzugt wird die Komponententemperatur der thermisch relevanten Komponente anhand eines Modell der thermisch relevanten Komponente modelliert. Insbesondere ist ein Modell geeignet, welches ausgebildet ist, ein transientes thermisches Verhalten einer thermisch relevanten Komponente abzubilden. Ein thermisch transientes Modell zum Modellieren der Komponententemperatur einer thermisch relevanten Komponente kann beispielweise die Geometrie und/oder die Wärmekapazität der Komponente berücksichtigen.

Ein weiterer Vorteil besteht darin, dass die Anlagenkomponenten detaillierter betrachtet werden können. Zum Bespiel kann anstatt den Generator pauschal als Ganzes zu betrachten, der Rotor und der Stator des Generators jeweils als eigene Komponenten behandelt werden. Sowohl für den Stator als auch für den Rotor kann eine individuelle Komponententemperatur modelliert und einem Windgeschwindigkeitswert zugeordnet werden.

Das vorgeschlagene Verfahren ermöglicht es, auf Basis einer insbesondere individuell modellierten Komponententemperatur einer thermisch relevanten Komponente besser zu modellieren, wann eine Windenergieanlage abgeregelt werden würde. Eine Überschätzung der Komponententemperatur aufgrund der ungenauen Abschätzung im Wesentlichen auf Basis einer Außentemperatur der Windenergieanlage kann so vermieden werden.

Besonders an Standorten mit hoher durchschnittlicher Außentemperatur kann die Erwartungsleistung einer Windenergieanlage mit dem vorgeschlagenen Verfahren deutlich genauer vorhergesagt werden, als dies anhand von Derating-Kurven möglich ist. Eine thermisch überdimensionierte Anlagenauslegung kann somit insbesondere an Standorten mit hoher durchschnittlicher Außentemperatur vermieden werden. Außerdem können Kühlkonzepte für eine Windenergieanlage auf Grundlage individuell ermittelter Komponententemperaturen thermisch relevanter Komponenten passender und insbesondere energieoptimierter ausgelegt werden.

Zum Bestimmen der Erwartungsleistung für einen Windgeschwindigkeitswert kann ein Modell der Windenergieanlage und vorzugsweise eine Leistungskurve der Windenergieanlage, z.B. eine Drehzahlleistungskurve, verwendet werden.

Gemäß einer Ausführungsform können über den Vorhersagezeitraum mehrere, zeitlich verteilte jeweils einem der mehreren Windgeschwindigkeitswerte zugeordnete Außentemperaturwerte vorgegeben werden. Die den vorgegebenen Windgeschwindigkeitswerte zugeordneten Außentemperaturwerte können eine Teilmenge von Außentemperaturwerten eines Außentemperaturverlaufs bilden. Besonders werden innerhalb desselben Zeitraums ein Windgeschwindigkeitsverlauf und ein Außentemperaturverlauf vorgegeben. Über einen Zeitstempel kann dann ein Außentemperaturwert des Außentemperaturverlaufs einem der vorgegebenen Windgeschwindigkeitswerte des Windgeschwindigkeitsverlaufs zugeordnet werden. Beide Verläufe können auch einfach als zwei gleich lange Listen oder Folgen vorgegeben werden, so dass sich die Zuordnung aus der Position in der Liste bzw. Folge ergibt.

Zudem wird vorgeschlagen, dass in dem Leistungsbestimmungsschritt die Erwartungsleistung für den wenigsten einen Windgeschwindigkeitswert unter Verwendung des diesem Windgeschwindigkeitswert zugeordneten Außentemperaturwertes und der diesem Windgeschwindigkeitswert zugeordneten Komponententemperatur der wenigstens einen thermisch relevanten Komponente bestimmt wird.

Zum Bestimmen der Erwartungsleistung der Windenergieanlage für einen der vorgegebenen Windgeschwindigkeitswerte können somit zusätzlich zu der Komponententemperatur der wenigstens einen thermisch relevanten Komponente auch der dem Windgeschwindigkeitswert zugeordnete Außentemperaturwert berücksichtigt werden. Insbesondere kann eine Außentemperatur berücksichtigt werden, um die Komponententemperaturderwenigstens einen thermisch relevanten Komponente mit erhöhter Genauigkeit zu ermitteln. Dabei kann die Außentemperatur über ein dynamisches Modell berücksichtigt werden.

Das Verfahren umfasst bevorzugt mehrere Leistungsbestimmungsschritte, in denen jeweils für einen unterschiedlichen der vorgegebenen Windgeschwindigkeitswerte eine dem jeweiligen Windgeschwindigkeitswert zugeordnete Erwartungsleistung bestimmt wird.

In bevorzugten Ausführungsvarianten wird zum Bestimmen der zu erwartenden Energieproduktion über den Vorhersagezeitraum der Leistungsbestimmungsschritt sukzessive für alle vorgegebenen Windgeschwindigkeitswerte wiederholt. Dadurch ergibt sich eine Leistungskurve für die Erwartungsleistung, die dann zu der dabei insgesamt erzeugten Energie über die Zeit aufintegriert werden kann. Insbesondere wird vorgeschlagen, den Leistungsbestimmungsschritt so lange zu wiederholen, bis für den gesamten Vorhersagezeitraum alle Erwartungsleistungen bestimmt wurden, die somit zu der für den Vorhersagezeitraum insgesamt zu erwartenden Energieproduktion aufintegriert werden.

Durch Widerholen des Leistungsbestimmungsschritts wird auch für die wenigstens eine, thermisch relevante Komponente jeweils eine Komponententemperatur neu ermittelt und beim Bestimmen der jeweiligen Erwartungsleistung berücksichtigt. Die Komponententemperatur des jeweils aktuellen Leistungsbestimmungsschrittes kann bevorzugt in Abhängigkeit von einer früheren Komponententemperatur derselben Komponente bestimmt werden, insbesondere in Abhängigkeit von dem unmittelbar vorhergehenden Wert der Komponententemperatur.

Insbesondere wird in jedem der Leistungsbestimmungsschritte vorzugsweise von wenigstens einer thermisch relevanten Komponente jeweils eine Komponententemperatur ermittelt, insbesondere individuell modelliert, und in einem Leistungsbestimmungsschritt für einen zeitlich folgenden Windgeschwindigkeitswertes zum Bestimmen der Erwartungsleistung verwendet.

Die den jeweils unterschiedlichen Windgeschwindigkeitswerten zugeordneten Komponententemperaturen der thermisch relevanten Komponente können jeweils unterschiedliche Werte haben. Beispielsweise kann während der Zeitdauer, die zwischen zwei zeitlich aufeinander folgenden Windgeschwindigkeitswerten liegt, die Leistung der Windenergieanlage erhöht worden sein, so dass sich die Komponententemperatur einer thermisch relevanten Komponente aufgrund von z.B. mechanischer Beanspruchung oder einem erhöhten Stromfluss erhöht. Genauso kann die einem aktuellen Windgeschwindigkeitswert zugeordnete Komponententemperatur der thermisch relevanten Komponente im Vergleich zu einem früheren Zeitpunkt gesunken sein, da die Komponente Wärme abgegeben hat, weil z.B. zuvor die Leistung die Windenergieanlage reduziert wurde oder die Außentemperatur gesunken ist.

Wenn in dem vorgeschlagenen Verfahren in mehreren wiederholt durchgeführten Leistungsbestimmungsschritten jeweils für einen unterschiedlichen der vorgegebenen Windgeschwindigkeitswerte eine Erwartungsleistung bestimmt wurde, kann aus allen so ermittelten Erwartungsleistungen die zu erwartende Energieproduktion der Windenergieanlage für den Vorhersagezeitraum bestimmt werden. Beispielsweise können die bestimmten Erwartungsleistungen aufsummiert oder aufintegriert werden, um die zu erwartende Energieproduktion der Windenergieanlage für den Vorhersagezeitraum zu bestimmen. Die bestimmten Erwartungsleistungen können auch zunächst interpoliert werden, um für den Vorhersagezeitraum einen Erwartungsleistungsverlauf zu bilden, über den intergiert wird, um die zu erwartende Energieproduktion zu bestimmen.

Falls der Vorhersagezeitrum eine kürzere Zeitdauer als ein Jahr umfasst, kann die für diesen Vorhersagezeitrum bestimmte zu erwartende Energieproduktion dazu verwendet werden, um eine zu erwartende Jahresenergieproduktion zu bestimmen, beispielweise indem die zu erwartende Energieproduktion auf ein Jahr hochgerechnet wird. Das vorgeschlagene Verfahren kann auch dazu verwendet werden, um für mehrere, über ein Jahr zeitlich verteilte Vorhersagezeiträume, jeweils eine zu erwartende Energieproduktion zu bestimmen. Diese für unterschiedliche, über ein Jahr verteilte Vorhersagezeiträume bestimmten mehreren zu erwartenden Energieproduktionen können aufsummiert oder aufintegriert werden, um eine zu erwartende Jahresenergieproduktion zu bestimmen.

Das Verfahren kann auch umfassen, dass in wenigstens einem Leistungsbestimmungsschritt für einen der Windgeschwindigkeitswerte eine Idealleistung bestimmt wird, die die Windenergieanlage bei idealen Randbedingungen und/oder ohne Berücksichtigung thermischer Verluste erzeugen könnte. Aus der Idealleistung kann mittels einer diesem Windgeschwindigkeitswert zugeordneten Anpassungsvorschrift die Erwartungsleistung ermittelt werden.

Die für den Windgeschwindigkeitswert bestimmte Idealleistung kann beispielsweise anhand einer Leistungskurve, z.B. einer Drehzahlleistungskurve, der Windenergieanlage bestimmt werden. Die Leistungskurve der Windenergieanlage kann beispielsweise auf Basis eines für den Vorhersagezeitraum ermittelten Windgeschwindigkeitsverlaufs berechnet werden.

Die dem Windgeschwindigkeitswert zugeordnete Anpassungsvorschrift gibt vorzugsweise eine temperaturabhängige Leistungsobergrenze vor, auf die die Idealleistung begrenzt wird. Die auf die Leistungsobergrenze begrenzte Idealleistung bildet dann die Erwartungsleistung. Die dem Windgeschwindigkeitswert zugeordnete Anpassungsvorschrift gibt also an, um welchen Abregelungsbetrag oder Abregelungsanteil die Anlagenleistung der Windenergieanlage für diesen Windgeschwindigkeitswert reduziert werden soll.

Die Anpassungsvorschrift ist besonders zeitlich der Erwartungsleistung zugeordnet, nämlich insoweit, als dass diese zusammen mit der aktuellen Erwartungsleistung auftritt. Bei der konkreten Berechnung kann dafür als aktuelle Erwartungsleistung die in dem vorherigen Schritt berechnete verwendet werden. Die Anpassungsvorschrift kann dabei besonders von der Erwartungsleistung und/oder einer Temperatur, abhängen, wie der Außentemperatur. Besonders hängt sie von einer oder mehreren Komponententemperaturen ab, die wiederum von der Erwartungsleistung und der Außentemperatur abhängen können.

Über die Anpassungsvorschrift kann besonders jeweils die Komponententemperatur der wenigstens einen thermisch relevanten Komponente berücksichtigt werden. Die Idealleistung, die somit durch eine idealisierte, also vereinfachte Leistungsbestimmung bestimmt wird, berücksichtigt thermische Verluste noch nicht, allenfalls ungenügend. Diese werden dann über die Anpassungsvorschrift berücksichtigt, was insbesondere zu einer Verringerung der Idealleistung führt und dadurch die Erwartungsleistung ergibt. Von der Erwartungsleistung wird somit angenommen, dass sie der tatsächlich zu erwartenden Leistung besser entspricht, als die Idealleistung.

Vorzugsweise gibt die Anpassungsvorschrift eine temperaturabhängige Leistungsobergrenze vor, auf die die Idealleistung begrenzt wird, sodass die auf die Leistungsobergrenze begrenzte Idealleistung die Erwartungsleistung bildet. Besonders ist vorgesehen, dass diese temperaturabhängige Leistungsobergrenze abhängig von der wenigstens einen Komponententemperatur vorgegeben wird. Hierdurch können die Komponententemperaturen, zumindest eine, konkret berücksichtigt werden. Dadurch können die einzelnen thermisch relevanten Komponenten konkret berücksichtigt werden.

Aus einer bzw. der Idealleistung und der Erwartungsleistung kann für den Windgeschwindigkeitswert ein diesem Windgeschwindigkeitswert zugeordneter zu erwartender thermisch bedingter Energieproduktionsverlust bestimmt werden. Beispielsweise kann eine Idealleistung und eine Erwartungsleistung jeweils mit einer vorgegebenen Zeitdauer, z.B. der Zeitdauer des Vorhersagezeitraums oder der Zeitdauer die zwischen zwei zeitlich aufeinanderfolgenden Windgeschwindigkeitswerten liegt, multipliziert werden, um so aus der Idealleistung eine theoretisch mögliche Energieproduktion und aus der Erwartungsleistung eine zu erwartende Energieproduktion zu bestimmen. Die Differenz der theoretisch möglichen Energieproduktion und der zu erwartenden Energieproduktion entspricht dann dem Energieproduktionsverlust der Windenergieanlage innerhalb dieser Zeitdauer.

Insbesondere kann der Energieproduktionsverlust für den Windgeschwindigkeitswert auch berechnet werden, indem zunächst die Differenz der diesem Windgeschwindigkeitswert zugeordneten Idealleistung und der ermittelten Erwartungsleistung gebildet wird. Die Differenz kann dann mit einer entsprechenden Zeitdauer multipliziert werden, um den Energieproduktionsverlust innerhalb dieser Zeitdauer zu bestimmen. Falls für unterschiedliche der vorgegebenen Windgeschwindigkeitswerte jeweils ein Leistungsbestimmungsschritt durchgeführt wird, in dem für den jeweiligen Windgeschwindigkeitswert aus einer Idealleistung mittels einer dem jeweiligen Windgeschwindigkeitswert zugeordneten Anpassungsvorschrift eine Erwartungsleistung ermittelt wird, kann für jeden der Windgeschwindigkeitswerte ein dem jeweiligen Windgeschwindigkeitswert zugeordneter Energieproduktionsverlust ermittelt werden. Die für die Windgeschwindigkeitswerte ermittelten Energieproduktionsverluste können aufsummiert oder aufintegriert werden, um für den gesamten Vorhersagezeitraum einen Energieproduktionsverlust zu ermitteln.

Insbesondere wird die Komponententemperatur einer thermisch relevanten Komponente während eines Leistungsbestimmungsschritts für einen der vorgegebenen Windgeschwindigkeitswerte ermittelt, während die Anpassungsvorschrift in einem nächsten, zeitlich nachfolgenden Leistungsbestimmungsschritt ermittelt wird.

Damit wird eine in einem Leistungsbestimmungsschritt ermittelte Anpassungsvorschrift jeweils dem zeitlich nachfolgenden Windgeschwindigkeitswert zugeordnet und in dem Leistungsbestimmungsschritt des nachfolgenden Windgeschwindigkeitswertes dazu verwendet, aus einer für den nachfolgenden Windgeschwindigkeitswert bestimmten Idealleistung mittels der Anpassungsvorschrift eine Erwartungsleistung zu bestimmen.

Vorzugsweise wird zum Ermitteln der Komponententemperatur der wenigstens einen thermisch relevanten Komponente eine Wärmekapazität und/oder wenigstens ein Wärmewiderstand der Komponente berücksichtigt. Insbesondere wird die Komponententemperatur der wenigstens einen thermisch relevanten Komponente so ermittelt, dass die Komponententemperatur der wenigstens einen thermisch relevanten Komponente in Abhängigkeit von der Außentemperatur und/oder der Wärmekapazität bestimmt wird.

Die Auswahl, ob eine Anlagenkomponente eine thermisch relevante Komponente ist oder nicht, wird bevorzugt anhand eines vorgegebenen Kriteriums durchgeführt.

Es wurde besonders erkannt, dass das tatsächliche Abregelverhalten der Windenergieanlage durch eine bloße Berücksichtigung der Außentemperatur zu großen Ungenauigkeiten führen kann.

Vorzugsweise wird die Komponententemperatur einer thermisch relevanten Komponente modelliert, also unter Verwendung eines Modells simuliert. Das Modell gibt dafür das transiente thermische Verhalten der Komponente wieder. Es kann darauf basierend eine Simulation durchgeführt werden, um die Komponententemperatur, insbesondere einen zeitlichen Verlauf der Komponententemperatur, zu ermitteln. Insbesondere kann individuell für diese thermisch relevante Komponente die Komponententemperatur ermittelt werden. Die Wärmekapazität und der wenigstens eine Wärmewiderstand können dabei in das Modell, das modelliert wurde, einfließen.

Insbesondere wenn eine Anlagenkomponente als thermisch relevante Komponente ausgewählt wurde, kann deren Komponententemperatur besonders zuverlässig und genau mit einem Modell, insbesondere einem thermisch transienten Modell der Komponente ermittelt werden. Ein solches geeignetes Modell ist z.B. das sogenannte *Lumped-element model,* oder auch *Lumped Thermal Capacity* (LTC)-Modell. Das LTC-Modell ist insbesondere dann besonders zuverlässig anwendbar, wenn die Biot-Zahl der Komponente gleich oder kleiner 0.1 ist. Dies ist insbesondere für den Stator, Rotor und Stahlturm einer Windenergieanlage regelmäßig der Fall. Falls diese Bedingung nicht auf eine Anlagenkomponente zutrifft, diese aber dennoch als thermisch relevante Komponente behandelt werden soll, ist es möglich das LTC-Modell entsprechend anzupassen und zum Modellieren der Komponententemperatur dieser Komponente zu verwenden. Mit dem LTC-Model kann das thermisch transiente Verhalten einer thermisch relevanten Komponente modelliert werden. Für die zum Modellieren verwendeten Zeitschritte können beispielsweise zeitliche Abstände von zehn Minuten verwendet werden. Insbesondere können die Zeitschritte so gewählt sein, das für jeden Zeitschritt ein Windgeschwindigkeitswert eines Windgeschwindigkeitsverlaufs vorgegeben ist. Andersherum können aus einem Windgeschwindigkeitsverlauf für genau diejenigen Windgeschwindigkeitswerte in einem Leistungsbestimmungsschritt eine Erwartungsleistung bestimmt werden, deren Zeitstempel einem der Zeitschritte entspricht, für die eine Komponententemperatur einer thermisch relevanten Komponente modelliert wird.

Das LTC-Model berücksichtigt insbesondere den Wärmewiederstand, und die Wärmekapazität einer Anlagenkomponente. Auch die Außentemperatur, die erzeugte Leistung, und/oder die Verlustleistung können beim LTC-Modell berücksichtigt werden.

Eine thermisch relevante Komponente kann beispielsweise nach dem Kriterium ausgewählt werden, dass angenommen werden kann, dass der externe Widerstand der Komponente viel größer als deren interner Wärmewiderstand ist. Das lässt sich durch folgende Formel beschreiben:

$$\frac{T - T_\infty}{T_0 - T_\infty} = exp\left(-\frac{hA}{mc}t\right)$$

wobei *T* die Komponententemperatur zum Zeitpunkt *t*, $T_0$ die Ausgangstemperatur zum Zeitpunkt *t=0,* $T_\infty$ die Komponententemperatur zum Zeitpunkt *t→∞,* *h* die Höhe der Komponente und A die Querschnittsfläche der Komponente, m die Masse der Komponente und c die spezifische Wärmekapazität der Komponente ist.

Dann sollte nämlich besonders das zeitliche Temperaturverhalten nicht vernachlässigt werden. Es wurde erkannt, dass eine solche Bedingung besonders im Stator, Rotor (des Generators) und Stahlturm erfüllt ist. Bei Hybridtürmen, die abschnittsweise aus Beton und Stahl bestehen, kann die Abweichung größer sein, und eine Modellanpassung vorgeschlagen werden. Eine Komponententemperatur derjenigen Anlagenkomponente der Windenergieanlage, die nicht als thermisch relevante Komponente ausgewählt wurde, beispielsweise ein Spinner, ein Maschinenhaus oder ein wassergekühlter Wechselrichter im Turm, wird vorzugsweise nicht mit einem thermisch transienten Modell ermittelt, sondern mit einem *steady-state* Modell. Hier erfolgt nur eine Berücksichtigung stationärer Zustände, weil erkannt wurde, dass das dynamische Übergangsverhalten vernachlässigbar ist. Bei einem *steady-state* Modell werden zum Ermitteln einer Komponententemperatur insbesondere die Außentemperatur und die Anlagenleistung berücksichtigt. Insbesondere dann, wenn die Außentemperatur vergleichsweise niedrig ist, kann eine Komponententemperatur einer thermisch nicht-relevanten Komponente anhand einer Derating-Kurve der Windenergieanlage abgeschätzt werden. Die thermisch nicht-relevanten Komponenten können insbesondere anhand des Kriterium ausgewählt werden, dass sie auf eine Temperaturänderung im Wesentlichen ohne zeitliche Verzögerung reagieren.

In dem Verfahren kann für die wenigstens eine thermisch relevante Komponente, und insbesondere für jede der thermisch relevanten Komponenten, jeweils eine temperaturabhängige Abregelungsvorschrift vorgegeben werden. Vorzugsweise gibt jede temperaturabhängige Abregelungsvorschrift jeweils eine von der Komponententemperatur der betreffenden thermisch relevanten Komponente abhängige Vorschrift zum Abregeln der Windenergieanlage an. Bevorzugt ist für jede thermisch relevante Komponente eine individuelle Abregelungsvorschrift vorgegeben. Eine einer thermisch relevanten Komponente zugeordnete Abregelungsvorschrift kann beispielsweise eine maximal zulässige Temperaturobergrenze für eine Komponententemperatur dieser Komponente angeben. Wenn eine ermittelte Komponententemperatur der Komponente diese Temperaturobergrenze überschreitet, soll die Windenergieanlage abgeregelt werden und zwar insbesondere soweit, dass die Komponententemperatur der thermisch relevanten Komponente wieder unterhalb der Temperaturobergrenze sinkt, zumindest nicht weiter ansteigt. Vorzugsweise ist für jede thermisch relevante Komponente der Windenergieanlage eine maximal zulässige Temperaturobergrenze vorgegeben. Es können aber auch für eine oder mehrere Komponenten, jeweils mehrere Temperaturgrenzen vorgesehen sein, denen gestaffelte Abregelungsvorschriften zugeordnet sind, z.B. jeweils ein prozentualer Abregelungswert.

Gemäß einer Ausführungsform wird vorgeschlagen, dass in Abhängigkeit von der wenigstens einen Komponententemperatur und optional in Abhängigkeit von mehreren Abregelungsvorschriften, wenigstens eine Anpassungsvorschrift ermittelt wird, die eine Vorschrift zum Abregeln der Windenergieanlage angibt.

Somit sind einzelnen Komponenten individuelle Abregelungsvorschriften zugeordnet, die aber ein Abregeln der Windenergieanlage insgesamt zur Folge haben. Insgesamt ergibt sich dabei die Anpassungsvorschrift, die diese einzelnen Abreglungsvorschriften vereint und dann konkret zu der gegenüber der Idealleistung reduzierten Erwartungsleistung führt.

Die Anpassungsvorschrift gibt somit vorzugsweise an um welchen Abregelungsbetrag oder welchen Abregelungsanteil die Windenergieanlage - insbesondere ausgehend von einer bestimmten Idealleistung - abgeregelt werden soll, um dadurch die Erwartungsleistung zu bestimmen.

Zum Ermitteln der Anpassungsvorschrift kann beispielsweise eine Differenz oder ein Verhältnis zwischen der maximal zulässigen Temperaturobergrenze einer Komponente und der für diese Komponente ermittelten Komponententemperatur gebildet werden. Anhand der Differenz oder des Verhältnisses kann dann eine Anpassungsvorschrift ermittelt werden und zwar derart, dass diese angibt, ob überhaupt und wenn ja um welchen Betrag die Anlagenleistung der Windenergieanlage reduziert werden soll, damit die Komponententemperatur unterhalb der maximal zulässigen Temperaturobergrenze sinkt.

Vorzugsweise wird vorgeschlagen, dass mehrere Leistungsbestimmungsschritte zeitlich hintereinander ausgeführt werden, sodass zu einem aktuellen Leistungsbestimmungsschritt ein vorheriger Leistungsbestimmungsschritt existiert. Die Windgeschwindigkeitswerte werden dabei in ihrer zeitlichen Reihenfolge nach und nach abgearbeitet.

Außerdem wird vorgeschlagen, dass in dem vorherigen Leistungsbestimmungsschritt oder in Abhängigkeit von einem vorherigen Leistungsbestimmungsschritt, die Anpassungsvorschrift ermittelt und in einem aktuellen Leistungsbestimmungsschritt dazu verwendet, für einen aktuellen Windgeschwindigkeitswert eine Idealleistung und davon abhängig und mittels der zuvor ermittelten Anpassungsvorschrift eine Erwartungsleistung zu ermitteln.

In dem aktuellen Leistungsbestimmungsschritt wird somit die Idealleistung bestimmt. Um diese in die Erwartungsleistung zu überführen, wird die im vorherigen Schritt ermittelte Anpassungsvorschrift verwendet. Die Berechnung der Erwartungsleistung erfolgt im aktuellen Schritt, aber die Anpassungsvorschrift bzw. entsprechende Informationen aus dem vorherigen Schritt werden verwendet.

Das bedeutet natürlich auch, dass in dem aktuellen Schritt eine Anpassungsvorschrift ermittelt wird, die dann im nächsten Schritt verwendet wird. Sinnvollerweise werden nicht nur zwei Schritte, sondern eine Vielzahl von Schritten in einer Wiederholungsschleife durchgeführt, z.B. ein Schritt alle zehn Minuten für einen Gesamtzeitraum von einem Jahr, also etwa 50.000 Schritte.

Besonders liegt hier der Gedanke zu Grunde, dass für die Anpassungsvorschrift eine oder mehrere konkrete Komponententemperaturen verwendet werden. Dazu kann ein dynamisches Temperaturverhalten der betreffenden thermisch relevanten Komponente berücksichtigt werden. Es wird also berücksichtigt, wie sich die jeweilige Komponententemperatur in dem Zeitintervall, das betrachtet wird, entwickelt. Also das Zeitintervall, für das jeweils der Leistungsbestimmungsschritt, der hier auch vereinfachend nur als Schritt bezeichnet wird, durchgeführt wird. Es kommt dann vorzugsweise auf die Komponententemperatur am Ende des Zeitintervalls an also am Ende des Schrittes. Es beginnt dann der nächste Leistungsbestimmungsschritt, und der verwendet die so ermittelte Komponententemperatur, als die Komponententemperatur, oder mehrere, des vorherigen Leistungsbestimmungsschrittes. Dabei wird davon ausgegangen, dass die Komponententemperatur dieses vorherigen Schrittes noch im Wesentlichen aktuell ist.

In einem vorgeschlagenen Verfahren ist es bevorzugt, dass, wenn für mehrere thermisch relevante Komponenten anhand der den jeweiligen Komponenten zugeordneten Anpassungsvorschriften festgestellt wird, dass die Windenergieanlage abgeregelt werden soll, ein Abregelungsbetrag derjenigen thermisch relevanten Komponente maßgeblich ist, die bzw. der zu der stärksten Abregelung der Windenergieanlage führt. Damit wird die Bestimmung der Erwartungsleistung besonders gut an das tatsächliche Verhalten der Windenergieanlage angepasst, sodass eine gute Genauigkeit der Erwartungsleistung und damit im Ergebnis der zu erwartenden Energieproduktion erreicht werden kann. Von der tatsächlichen Windenergieanlage, für die die Vorhersage gemacht wird, wird nämlich erwartet, dass sie sich so verhält, sodass bei ihr sichergestellt wird, dass die Anlagenleistung soweit reduziert wird, dass keine der Anlagenkomponenten beschädigt wird.

Vorzugsweise ist die wenigstens eine thermisch relevante Komponente ausgewählt aus einer Gruppe von Anlagenkomponenten, die wenigstens umfasst: einen Generator, insbesondere einen Stator und einen Rotor eines Generators, und einen Turm, der wenigstens teilweise aus Stahl gebildet ist. Insbesondere die individuellen Komponententemperaturen eines Stators, eines Rotors, und eines wenigstens teilweise aus Stahl gebildeten Turms können oftmals nur sehr ungenau anhand von herkömmlichen Methoden, wie z.B. anhand einer Derating-Kurve, abgeschätzt werden. Besonders wurde erkannt, dass das thermische Verhalten dieser Komponenten nicht als stationär angenommen werden kann, bzw. dass das zu einer zu starken Abweichung vom tatsächlichen Verhalten führt. Dazu können der Rotor und der Stator des Generators einzeln oder zusammen betrachtet werden.

Es wurde erkannt, dass durch Modellierung der Komponententemperatur dieser Komponenten mittels eines thermisch transienten Modells, wie dem LTC-Modell, individuell und unter Berücksichtigung wenigstens der Wärmekapazität der jeweiligen Komponente, eine Erwartungsleistung unter Verwendung der modellierten Komponententemperaturen mit vergleichsweise höherer Zuverlässigkeit und Genauigkeit und insbesondere realistischer bestimmt werden können.

Das Verfahren ist auch dazu geeignet, die Erforderlichkeit und Dimensionierung eines Kühlsystems für eine Anlagenkomponente zu beurteilen bzw. zu bestimmen.

Gemäß einer Ausführungsform wird vorgeschlagen, dass wenigstens eine thermisch relevante Komponente mit einem aktiven Kühlsystem versehen ist, und zur Bestimmung der Komponententemperatur der betreffenden thermisch relevanten Komponente ein Verhalten des aktiven Kühlsystems berücksichtigt wird, wobei insbesondere vorgesehen ist, dass das Verfahren zum Bestimmen der zu erwartenden Energieproduktion wenigstens einmal als Verfahren mit aktiver Kühlung und einmal als Verfahren ohne aktive Kühlung durchgeführt wird, wobei bei der Durchführung als Verfahren mit Kühlung das aktive Kühlsystem berücksichtigt wird, und bei der Durchführung als Verfahren ohne Kühlung das aktive Kühlsystem nicht berücksichtigt wird, und insbesondere ein Vergleich der jeweils ermittelten zu erwartenden Energieproduktionen vorgenommen wird.

Hierdurch kann die Notwendigkeit und ggf. Dimensionierung eines Kühlsystems beurteilt werden. Dabei liegt die Erkenntnis zu Grunde, dass durch eine ungenaue Bestimmung der zu erwartenden Energieproduktion ein Kühlsystem falsch beurteilt werden kann. Durch die verbesserte Vorhersage, wird das verbessert. Dazu wurde erkannt, dass nun auch die Auswirkungen eines solchen Kühlsystems auf die Energieproduktion so genau erkannt werden können, dass je eine Bestimmung der Energieproduktion mit Kühlsystem und eine ohne Kühlsystem zu ausreichend verlässlichen Werten führen kann.

Insbesondere ist vorgesehen, dass anschließend ein Vergleich der jeweils ermittelten zu erwartenden Energieproduktionen vorgenommen wird. Anhand des Vergleichs kann festgestellt werden, ob die Verwendung des aktiven Kühlsystems tatsächlich vorteilhaft ist und/oder ob das aktive Kühlsystem bereits energieoptimiert dimensioniert ist.

Die Erfindung soll nun anhand von bevorzugten Ausführungsbeispielen in Bezug auf die Figuren näher erläutert werden. Von den Figuren zeigt:

Fig. 1: eine Windenergieanlage, die mehrere Anlagenkomponenten aufweist;

Fig. 2: ein Ablaufdiagramm eines Verfahrens zum Bestimmen der zu erwartenden Energieproduktion;

Fig. 3: ein Ablaufdiagramm eines Leistungsbestimmungsschritts;

Fig. 4: zwei Derating-Kurven einer Windenergieanlage mit einer Kühlpaketoption;

Fig. 5: einen Komponententemperaturverlauf eines Generators;

Fig. 6: schematisch eine Windenergieanlage und eine aufgeschnittene Gondel;

Fig. 7: eine Derating-Kurve einer Windenergieanlage mit einer Option für warmes Klima.

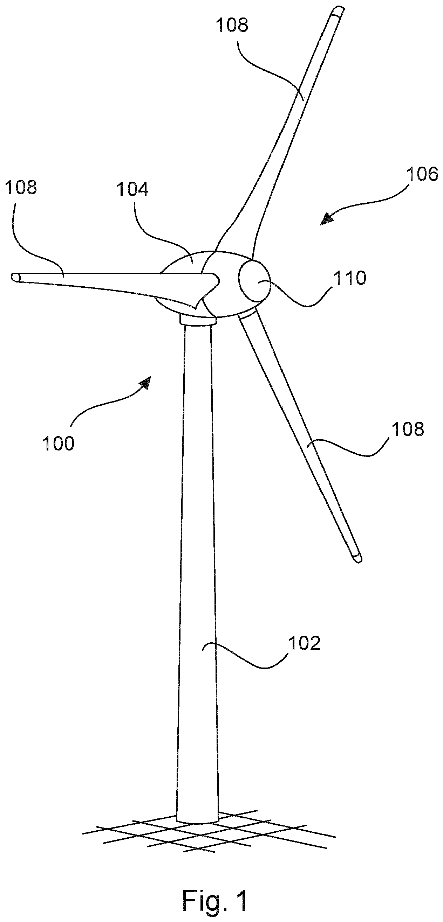

Figur 1 zeigt eine schematische Ansicht einer Windenergieanlage 100 gemäß einer Ausführungsform.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Der Generator ist mittels eines Umrichters an ein elektrisches Netz, bspw. ein Windparknetz oder ein elektrisches Versorgungsnetz, angeschlossen, um einen dreiphasigen Wechselstrom einzuspeisen.

Die Windenergieanlage umfasst hierfür ein Steuermodul und/oder eine Steuereinheit und/oder einen Umrichter und/oder eine Steuereinheit eines Umrichters, die dazu eingerichtet ist, ein vorstehend oder nachstehend beschriebenes Verfahren auszuführen.

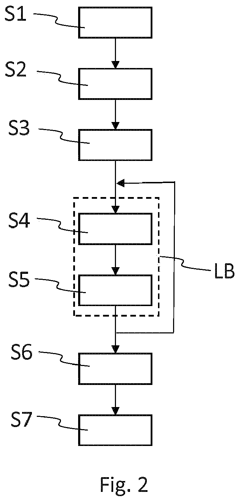

Figur 2 zeigt ein Ablaufdiagramm eines Verfahrens zum Bestimmen der zu erwartenden Energieproduktion einer Windenergieanlage innerhalb eines Vorhersagezeitraums. Die Windenergieanlage weist mehrere Anlagenkomponenten auf. Wenigstens eine der Anlagenkomponenten wird nach einem vorgegebenen Kriterium, insbesondere in Abhängigkeit von dem Verhältnis des äußeren Wärmewiderstands einer Anlagenkomponente zu deren innerem Wärmewiderstand, als thermisch relevante Komponente ausgewählt (Schritt S1). In dem Verfahren werden weiterhin für den Vorhersagezeitraum mehrere, zeitlich verteilte Windgeschwindigkeitswerte vorgegeben (Schritt S2). Die vorgegebenen Windgeschwindigkeitswerte können Windgeschwindigkeitswerte eines Windgeschwindigkeitsverlaufs sein. In dem Verfahren werden weiterhin mehrere, über den Vorhersagezeitraum zeitlich verteilte jeweils einem der vorgegebenen Windgeschwindigkeitswerte zugeordnete Außentemperaturwerte vorgegeben (Schritt S3). In alternativen Varianten des Verfahrens werden jedoch keine Außentemperaturwerte vorgegeben und werden somit zum Ermitteln einer Erwartungsleistung für einen Windgeschwindigkeitswert nicht berücksichtigt.

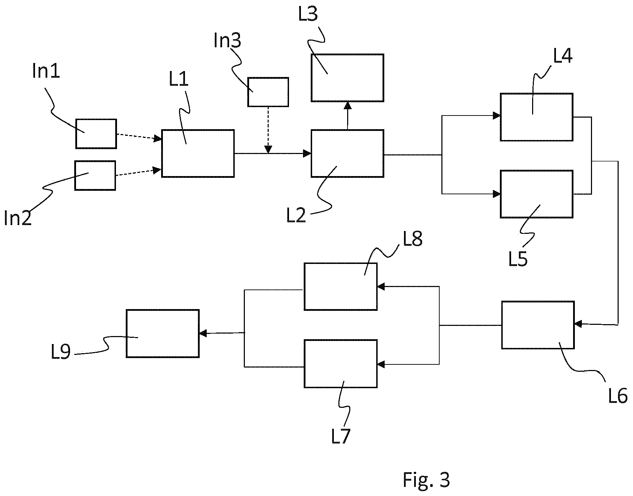

In dem Verfahren werden zum Bestimmen der zu erwartenden Energieproduktion über den Vorhersagezeitraum für alle vorgegebenen Windgeschwindigkeitswerte sukzessive jeweils ein Leistungsbestimmungsschritt LB durchgeführt. Jeder der Leistungsbestimmungsschritte LB kann wie in Bezug auf Figur 3 beschrieben durchgeführt werden.

Insbesondere wird in jedem der Leistungsbestimmungsschritte LB für einen der vorgegebenen Windgeschwindigkeitswerte eine diesem Windgeschwindigkeitswert zugeordnete Erwartungsleistung der Windenergieanlage bestimmt. Zum Bestimmen der Erwartungsleistung für einen der Windgeschwindigkeitswerte wird zunächst anhand einer Leistungskurve der Windenergieanlage eine Idealleistung bestimmt (Schritt S4). Mittels einer dem Windgeschwindigkeitswert zugeordneten Anpassungsvorschrift, die in einem der vorherigen Leistungsbestimmungsschritte ermittelt wurde, wird aus der Idealleistung die Erwartungsleistung ermittelt (Schritt S5). Die Anpassungsvorschrift gibt insbesondere an, um welchen Abregelungsbetrag oder Abregelungsanteil der Anlagenleistung der Windenergieanlage zukünftig, also im nächsten Schritt bzw. Durchlauf reduziert werden soll. Insbesondere gibt die Anpassungsvorschrift eine temperaturabhängige Leistungsobergrenze vor, auf die die Idealleistung begrenzt wird soll, so dass die auf die Leistungsobergrenze begrenzte Idealleistung die Erwartungsleistung bildet, sofern nicht schon die Idealleistung darunterliegt.

Die Anpassungsvorschrift wird insbesondere in Abhängigkeit von der Komponententemperatur wenigstens einer thermisch relevanten Komponente ermittelt. Insbesondere wird in einem Leistungsbestimmungsschritt für einen Windgeschwindigkeitswert eine Komponententemperatur wenigstens einer thermisch relevanten Komponente individuell für diese Komponente ermittelt. Mittels einer für diese thermisch relevante Komponente vorgegebene Abregelungsvorschrift und der ermittelten Komponententemperatur wird dann die Anpassungsvorschrift ermittelt und einem zeitlich nachfolgenden Windgeschwindigkeitswert zugeordnet. Die Anpassungsvorschrift gibt dann an um welchen Abregelungsbetrag oder um welchen Abregelungsanteil die für den nachfolgenden Windgeschwindigkeitswert bestimmte Idealleistung reduziert werden soll. Beispielsweise kann die Abregelungsvorschrift eine maximal zulässige Temperarturobergrenze für eine Komponente vorgeben. Falls die für diese Komponente ermittelte Komponententemperatur oberhalb der Temperarturobergrenze liegt, wird die Anpassungsvorschrift insbesondere so ermittelt, dass die Anlagenleistung um einen derart gewählten Abregelungsbetrag reduziert wird, dass die Komponententemperatur wieder unterhalb der Temperarturobergrenze sinkt.

In dem Verfahren wird die Komponententemperatur wenigstens einer thermisch relevanten Komponente in Abhängigkeit von der Wärmekapazität der Komponenten mittels eines thermisch transienten Modells ermittelt. Durch Verwenden eines thermisch transienten Modells der Komponente kann die Komponententemperatur insbesondere abhängig von den intrinsischen Eigenschaften, wie der Geometrie und der Wärmekapazität der Komponente, bestimmt werden. Eine vergleichsweise ungenaue Abschätzung der Komponententemperatur anhand eines Außentemperaturwertes kann so vermieden werden.

Jedoch kann zum Bestimmen der Erwartungsleistung für einen Windgeschwindigkeitswert zusätzlich zu der diesem Windgeschwindigkeitswert zugeordneten Komponententemperaturen auch noch der diesem Windgeschwindigkeitswert zugeordnete Außentemperaturwert verwendet werden, um die Berechnung der Komponententemperaturen noch realitätsnäher zu gestalten.

Aus der in einem Leistungsbestimmungsschritt LB für einen Windgeschwindigkeitswert bestimmten Idealleistung wird eine theoretisch mögliche Energieproduktion und aus der in diesem Leistungsbestimmungsschritt LB bestimmten Erwartungsleistung wird eine zu erwartende Energieproduktion berechnet, indem die Idealleistung und die Erwartungsleistung mit einer Zeitdauer multipliziert werden (Schritt S6). Die jeweilige Zeitdauer ist für jeden der Windgeschwindigkeitswerte jeweils so gewählt, dass sie die Zeitspanne bis zu dem zeitlich nachfolgenden Windgeschwindigkeitswert umfasst. So werden für jeden der vorgegebenen Windgeschwindigkeitswerte jeweils eine diesem Windgeschwindigkeitswert zugeordnete zu erwartende Energieproduktionen berechnet.

Um die für den Vorhersagezeitraum zu erwartende Energieproduktion zu bestimmen, werden die den Windgeschwindigkeitswerten zugeordneten zu erwartenden Energieproduktionen aufsummiert (Schritt S7).

Alternativ oder zusätzlich kann auch ein für den Vorhersagezeitraum zu erwartender Energieproduktionsverlust bestimmt werden, indem für jeden der Windgeschwindigkeitswerte eine theoretisch mögliche Energieproduktion und eine zu erwartende Energieproduktion ermittelt und von diesen die Differenz gebildet wird. Die Differenz entspricht dann dem Energieproduktionsverlust für diesen Windgeschwindigkeitswert. Für jeden der Windgeschwindigkeitswerte kann so ein jeweils zugeordneter zu erwartender Energieproduktionsverlust bestimmt und die mehreren so bestimmten Energieproduktionsverluste aufsummiert werden, um so den für den Vorhersagezeitraum zu erwartenden Energieproduktionsverlust zu berechnen.

Figur 3 zeigt ein Ablaufdiagramm eines Leistungsbestimmungsschritts, in dem für einen Windgeschwindigkeitswert eine Erwartungsleistung einer Windenergieanlage mit mehreren Anlagenkomponenten und eine einem zeitlich nachfolgenden Windgeschwindigkeitswert zugeordnete Anpassungsvorschrift ermittelt wird.

Bevor der Leistungsbestimmungsschritt ausgeführt wird, werden mehrere zeitlich verteilte Windgeschwindigkeitswerte vorgegeben (Schritt In1) sowie eine Leistungskurve der Windenergieanlage ermittelt (Schritt In2). Die Zeitstempel der vorgegebenen Windgeschwindigkeitswerte liegen insbesondere innerhalb eines Vorhersagezeitraums, für den eine zu erwartenden Energieproduktion einer Windenergieanlage bestimmt werden soll.

Die vorgegebenen Windgeschwindigkeitswerte können Windgeschwindigkeitswerte eines Windgeschwindigkeitsverlaufs sein. Derselbe Windgeschwindigkeitsverlauf kann dazu verwendet werden, die Leistungskurve der Windenergieanlage zu ermitteln.

Der Leistungsbestimmungsschritt wird für einen dieser vorgegebenen Windgeschwindigkeitswerte ausgeführt, kann aber sukzessive für alle weiteren vorgegebenen Windgeschwindigkeitswerte wiederholt werden.

In dem Leistungsbestimmungsschritt wird zunächst anhand der Leistungskurve für den Windgeschwindigkeitswert eine Idealleistung der Windenergieanlage ermittelt (Schritt L1). Mittels einer dem Windgeschwindigkeitswert zugeordneten Anpassungsvorschrift wird aus der Idealleistung eine Erwartungsleistung ermittelt (Schritt L2). Die Anpassungsvorschrift wurde zeitlich vor dem Leistungsbestimmungsschritt ermittelt (Schritt In3) und diesem Windgeschwindigkeitswert zugeordnet. Die Anpassungsvorschrift gibt eine temperaturabhängige Leistungsobergrenze vor, auf die die Idealleistung reduziert wird. Die reduzierte Anlagenleistung ist dann die Erwartungsleistung. Insbesondere wurde die dem Windgeschwindigkeitswert zugeordnete Anpassungsvorschrift in einem vorherigen Leistungsbestimmungsschritt ermittelt, der für einen zeitlich früheren Windgeschwindigkeitswert ausgeführt wurde. Insbesondere wurde in dem vorherigen Leistungsbestimmungsschritt eine Komponententemperatur wenigstens einer thermisch relevanten Komponente modelliert, diese mit einer für die Komponente vorgegebenen Temperaturobergrenze verglichen, und auf Basis des Vergleichs die dem Windgeschwindigkeitswert zugeordnete Anpassungsvorschrift ermittelt.

Falls der Leistungsbestimmungsschritt als erster Leistungsbestimmungsschritt ausgeführt wird und es entsprechend keinen vorherigen Leistungsbestimmungsschritt gibt, kann die Anpassungsvorschrift mit dem Wert 1 vorgegeben werden, sodass für diesen Leistungsbestimmungsschritt die Idealleistung der Erwartungsleistung entspricht. Alternativ kann ein Wert basierend auf einem stationären Verhalten angenommen werden. Es kommt auch in Betracht, dass der erste Schritt, oder mehrere erste Schritte zum tatsächlichen Bestimmen der zu erwartenden Energieproduktion nicht eingehen und nur zum Einschwingen des Vorgangs dienen.

Die Erwartungsleistung kann in eine für eine bestimmte Zeitdauer zu erwartende Energieproduktion umgerechnet werden, indem diese mit einer Zeitdauer multipliziert wird. Die Zeitdauer kann insbesondere dem zeitlichen Abstand zwischen diesem Windgeschwindigkeitswert und einem zeitlich nachfolgenden der vorgegebenen Windgeschwindigkeitswerte entsprechen. Insbesondere können für alle vorgegebenen Windgeschwindigkeitswerte jeweils für die Zeitdauer bis zu dem zeitlich als nächstes nachfolgenden Windgeschwindigkeitswert eine Energieproduktion ermittelt und die ermittelten Energieproduktionen aufsummiert werden, um die zu erwartende Energieproduktion für einen Vorhersagezeitraum zu bestimmen. Es kann aber auch ein zeitlicher Verlauf der Erwartungsleistungen aufgenommen werden, und erst später dieser Verlauf über den Vorhersagezeitraum zu der zu erwartenden Energieproduktion aufintegriert werden.

Aus der Idealleistung und der Erwartungsleistung kann auch ein dem Windgeschwindigkeitswert zugeordneter Energieproduktionsverlust berechnet werden, indem die Differenz zwischen der Idealleistung und der Erwartungsleistung gebildet und mit einer vorgegebenen Zeitdauer multipliziert wird. Idealleistung und Erwartungsleistung können auch zunächst in Energien umgerechnet und dann die Differenz gebildet werden, um den dem Windgeschwindigkeitswert zugeordneten Energieproduktionsverlust zu bestimmen. Falls für mehrere Windgeschwindigkeitswerte jeweils ein Energieproduktionsverlust bestimmt wird, können diese mehreren Energieproduktionsverluste aufsummiert oder aufintegriert werden, um einen zu erwartenden Energieproduktionsverlust für den Vorhersagezeitraum zu bestimmen.

Anschließend wird in dem Leistungsbestimmungsschritt eine Anpassungsvorschrift für einen zeitlich nachfolgenden Windgeschwindigkeitswert ermittelt. Zum Ermitteln der Anpassungsvorschrift werden zunächst die Anlagenkomponenten der Windenergieanlage betrachtet.

Anhand eines vorgegeben Kriterium wird aus den Anlagenkomponenten wenigstens eine thermisch relevante Komponente ausgewählt. Das Kriterium kann so vorgegeben sein, dass solche Anlagenkomponenten thermisch relevante Komponenten sind, deren innerer Wärmewiderstand gegenüber ihrem äußeren Widerstand vernachlässigbar ist.

Für die wenigstens eine thermisch relevante Komponente wird mittels eines thermisch transienten Modells, insbesondere mittels dem LTC-Modell, und unter Berücksichtigung der Wärmekapazität der Komponente eine individuelle Komponententemperatur der Komponente ermittelt (Schritt L4). Für die übrigen Anlagenkomponenten wird eine Komponententemperatur anhand eines *steady-state* Modells unter der Annahme ermittelt, dass eine Temperaturänderung der Anlagenkomponenten ohne zeitliche Verzögerung erfolgt (Schritt L5).

Für jede der Anlagenkomponenten wird in Abhängigkeit von den jeweils ermittelten Komponententemperaturen und jeweils den Anlagenkomponenten zugeordneten Abregelungsvorschriften eine Anpassungsvorschrift für einen zeitlich nachfolgenden Windgeschwindigkeitswert ermittelt.

Die Abregelungsvorschriften der Anlagenkomponenten geben jeweils für ihre zugeordnete Anlagenkomponente eine maximal zulässige Temperaturobergrenze vor. Die ermittelten Komponententemperaturen der Anlagenkomponenten werden jeweils mit den der jeweiligen Anlagenkomponente zugeordneten Temperaturobergrenze verglichen (Schritt L6).

Anhand der jeweiligen Vergleiche wird für jede Anlagenkomponente festgestellt, ob die jeweilige Temperaturobergrenze überschritten wurde (Schritt L7) oder nicht (Schritt L8). Wenn die Komponententemperaturen mehrerer Anlagenkomponenten die dazugehörige Temperaturobergrenze überschritten haben, wird weiterhin festgestellt, um welchen Abregelungsbetrag oder Abregelungsanteil die Windenergieanlage abgeregelt werden muss, damit die Komponententemperaturen wieder unterhalb ihrer Temperaturobergrenze liegen.

Für das Ermitteln der Anpassungsvorschrift (Schritt L9) ist dann insbesondere der Abregelungsbetrag derjenigen thermisch relevanten Komponente maßgeblich, der zu der stärksten Abregelung der Windenergieanlage führt.

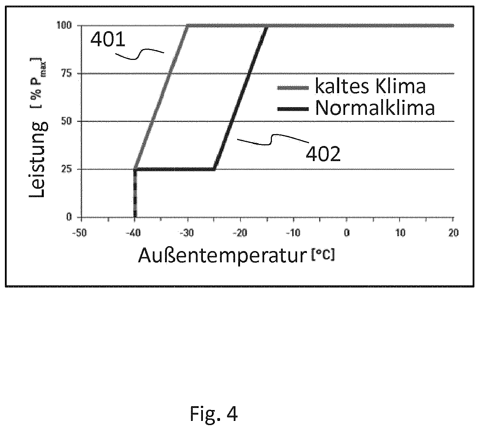

Figur 4 zeigt zwei Derating-Kurven einer Windenergieanlage je mit einer Option für kaltes Klima *(cold climate)* und ohne einer solchen Option *(normal climate):* eine erste Derating-Kurve 401 ist für kaltes Klima und eine zweite Derating-Kurve 402 für Normalklima.

Die Derating-Kurven 401, 402 beschreiben jeweils die maximal zulässige Anlagenleistung der Windenergieanlage in Abhängigkeit von der Außentemperatur.

Insbesondere in dem Temperaturbereich zwischen -40°C und -20°C sind deutliche Unterschiede zwischen den beiden Derating-Kurven 401, 402 erkennbar. Diese unterschiedlichen Derating-Kurven 401, 402 können bei der Bestimmung der Erwartungsleistung berücksichtigt werden.

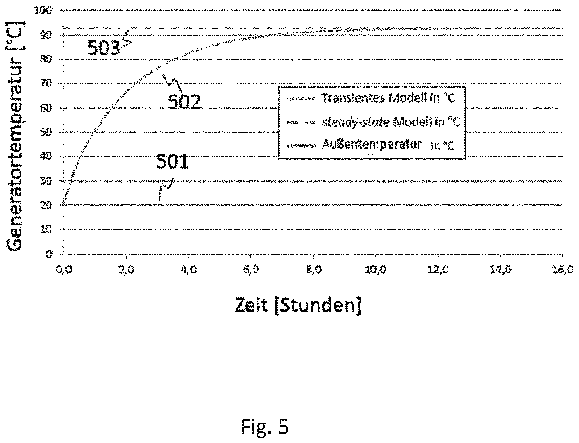

Figur 5 zeigt einen Komponententemperaturverlauf eines Generators, einmal berechnet mit einem thermisch transienten Modell und einmal berechnet mit einem *steady-state* Modell. Für beide Simulationen wurde eine konstante Außentemperatur von 20°C angenommen, was die erste Kurve 501 illustriert.

Die mit dem *steady-state* Modell simulierte Komponententemperatur des Generators liegt über die gesamte Zeitdauer der Simulation konstant bei einem Wert. Dieser Verlauf wird durch die dritte Kurve 503 gezeigt.

Der mit dem thermisch transienten Modell simulierte Komponententemperaturverlauf des Generators zeigt ein dynamisches Verhalten. Den Verlauf gibt die zweite Kurve 502 wieder. Zu Beginn der Simulation steigt die Komponententemperatur des Generators ausgehend von dem Wert der Außentemperatur kontinuierlich an. Mit fortschreitender simulierter Zeitdauer nähert sich die Komponententemperatur des Generators dem Wert der mit dem *steady-state* Modell berechneten Komponententemperatur an. Ab einer simulierten Zeitdauer von ungefähr zehn Stunden liefern beide Modelle im Wesentlichen dasselbe Ergebnis für die Komponententemperatur des Generators.

Insbesondere während der simulierten Zeitdauer der ersten zehn Stunden, wird die Komponententemperatur des Generators durch Verwenden des *steadystate* Modells überschätzt. Es wurde hier erkannt, dass auch das zeitliche thermische Verhalten des Generators, das kann auch für andere Komponenten gelten, ganz erheblich sein kann, wie an der großen Zeitkonstanten gemäß Figur 5 erkannt werden kann.

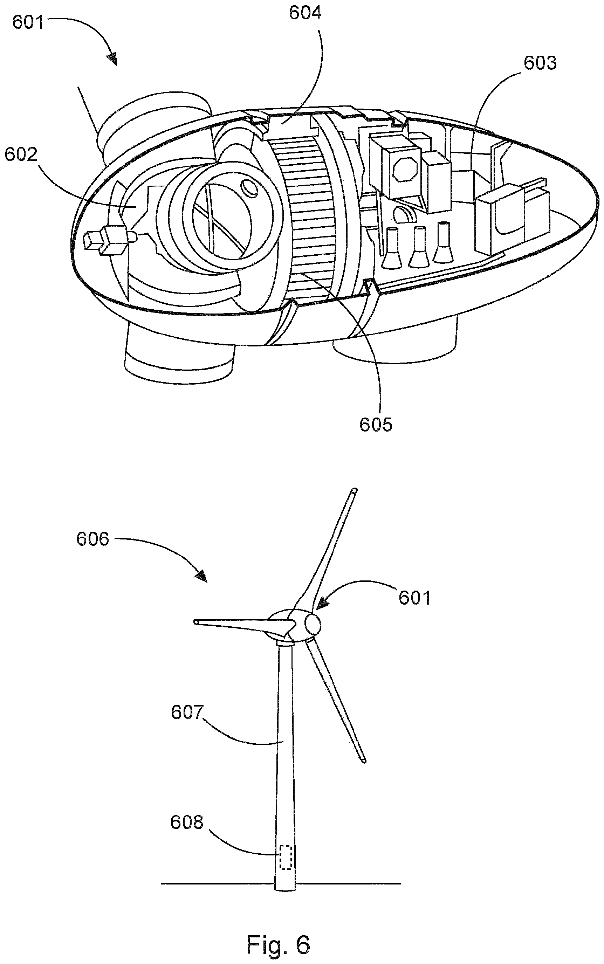

Figur 6 illustriert für eine thermische Betrachtung relevante Anlagenkomponenten, nämlich in einem Ausschnitt einer teilweise aufgeschnittenen Gondel 601, einen Spinner 602, der den dem Wind zugewandten Teil der Gondel 601 bildet, und ein Maschinenhaus 603, das den dem Wind abgewandten Teil der Gondel bildet. Diese beiden Elemente können über ein *steady-state*-Modell berücksichtigt werden. Außerdem sind ein Stator 604 und ein Rotor 605 gezeigt, die zusammen im Wesentlichen einen Generator bilden. Stator 604 und Rotor 605, bzw. der Generator, weisen jeweils ein thermisches Verhalten auf, zu dem vorgeschlagen wird, dass es jeweils über ein dynamisches Modell, insbesondere ein LTC-Modell berücksichtigt werden sollte.

Die Figur 6 zeigt auch schematisch eine Windenergieanlage 606, die die Gondel 601 aufweist, aber in nicht geschnittener Darstellung, die auf einem Turm 607 angeordnet ist. In dem Turm 607 befindet sich ein E-Modul 608, also besonders eine Wechselrichtereinrichtung, die meist viele Wechselrichter aufweist. Das E-Modul 608 ist nur zum Zwecke der Veranschaulichung außen dargestellt. Es ist aber üblicherweise in dem Turm, nämlich dort im Turmfuß angeordnet und sein thermisches Verhalten kann von dem Turm 607 und der Art der Kühlung des E-Moduls abhängen.

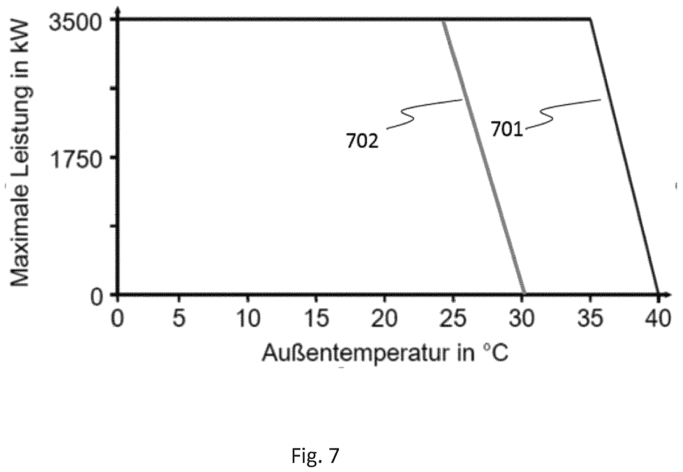

Figur 7 zeigt eine Derating-Kurve 701 einer Windenergieanlage mit einer Option für warmes Klima *(hot climate).* Eine Derating-Kurve einer Windenergieanlage ohne eine solche Option, die Derating-Kurve 702, zeigt eine Leistungsreduzierung bereits bei einer niedrigeren Temperatur.

Die Derating-Kurven der Fig. 7 zeigen, wie solche unterschiedlichen Kühloptionen bei Vorhersagen für die Bestimmung von Erwartungsleistungen bisher berücksichtigt wurden. Es wurde aber erkannt, dass eine Option für warmes Klima *(hot climate)*, ein anderes Kühlkonzept haben kann.

Häufig wird besonders für das E-Modul, also besonders für die Wechselrichter, die im Turmfuß angeordnet sind, eine Luftkühlung verwendet, die zu einer Erwärmung der Luft im Turm führt. Für die Rückkühlung der so erwärmten Luft wird bei einer normalen Option die Turmwandung verwendet. Dazu steigt die Luft im Inneren des Turms auf und kühlt sich an der Turmwandung ab. Ein Kontakt mit Außenluft, die verunreinigt sein kann, wird vermieden. Es wurde erkannt, dass hier die thermische Dynamik des Turmes eine Rolle spielen kann und daher zum Bestimmen der zu erwartenden Energieproduktion berücksichtigt wird.

Bei der Option für warmes Klima *(hot climate)* wird angenommen, dass die Kühlwirkung über die Turmwandung nicht ausreichend ist, weil der Turm sich nicht ausreichend abkühlt, und stattdessen wird die erwärmte Luft gegen kühlere Außenluft getauscht. Die Turmwandung wird also nicht oder nicht ausschließlich zum Kühlen verwendet. Hier kann die thermische Dynamik der Turmwandung daher vernachlässigt werden. Diese Option kann auch als aktives Kühlsystem bezeichnet werden, wohingegen die Kühlung über die Turmwandung als passives Kühlsystem bezeichnet werden kann. Zur Prüfung, welche der beiden Optionen zu mehr Ertrag führt, kann das Verfahren zum Bestimmen einer zu erwartenden Energieproduktion für beide Optionen unabhängig durchgeführt werden, und es können die Ergebnisse verglichen werden.

Bei einem anderen Kühlkonzept, ist besonders für das E-Modul, also besonders für die Wechselrichter, die im Turmfuss angeordnet sind, eine Wasserkühlung mit außerhalb des Turmes stehendem Rückkühler vorgesehen. Das kann für beide Optionen vorgesehen sein, also sowohl für Option für warmes Klima *(hot climate)*, als auch für die normale Option, wobei sich dann die Optionen in ihrer Auslegung unterscheiden können, also besonders Stärke des Kühlstromes, als auch Größe des Rückkühlers. Dieses Kühlkonzept kann auch als aktives Kühlsystem bezeichnet werden und hier kann die thermische Dynamik vernachlässigt werden.

**Patentansprüche**

1. Verfahren zum Bestimmen einer für einen Vorhersagezeitraum zu erwartenden Energieproduktion einer Windenergieanlage (100), insbesondere einer zu erwartenden Jahresenergieproduktion einer Windenergieanlage (100), wobei

    - die Windenergieanlage (100) mehrere Anlagenkomponenten aufweist,
    - wenigstens eine der Anlagenkomponenten als thermisch relevante Komponente ausgewählt wird,
    - für den Vorhersagezeitraum mehrere, zeitlich verteilte Windgeschwindigkeitswerte vorgegeben werden, und
    - in einem Leistungsbestimmungsschritt für einen der Windgeschwindigkeitswerte eine Erwartungsleistung der Windenergieanlage (100) bestimmt wird, wobei

        - die Erwartungsleistung eine von der Windenergieanlage (100) für diesen Windgeschwindigkeitswert als erzeugte Leistung zu erwartende Anlagenleistung angibt, und
        - von der wenigstens einen thermisch relevanten Komponente eine diesem Windgeschwindigkeitswert zugeordnete Komponententemperatur berücksichtigt wird, und

    - die für den Windgeschwindigkeitswert bestimmte Erwartungsleistung der Windenergieanlage (100) zum Bestimmen der für den Vorhersagezeitraum zu erwartenden Energieproduktion der Windenergieanlage (100) verwendet wird.

2. Verfahren nach Anspruch 1, das umfasst, dass

    - über den Vorhersagezeitraum mehrere, zeitlich verteilte jeweils einem der mehreren Windgeschwindigkeitswerte zugeordnete Außentemperaturwerte vorgegeben werden, und
    - in dem Leistungsbestimmungsschritt die Erwartungsleistung für den wenigsten einen Windgeschwindigkeitswert unter Verwendung des diesem Windgeschwindigkeitswert zugeordneten Außentemperaturwertes und der diesem Windgeschwindigkeitswert zugeordneten Komponententemperatur der wenigstens einen thermisch relevanten Komponente bestimmt wird.

3. Verfahren nach Anspruch 1 oder 2, wobei zum Bestimmen der zu erwartenden Energieproduktion über den Vorhersagezeitraum

    - der Leistungsbestimmungsschritt sukzessive für alle vorgegebenen Windgeschwindigkeitswerte wiederholt wird, und dabei
    - für jeden Windgeschwindigkeitswert jeweils eine Erwartungsleistung bestimmt wird, wobei für jeden der Windgeschwindigkeitswerte von wenigstens einer thermisch relevanten Komponente jeweils eine dem entsprechenden Windgeschwindigkeitswert zugeordnete Komponententemperatur ermittelt und beim Bestimmen der jeweiligen Erwartungsleistung berücksichtigt wird, und

- aus allen so ermittelten Erwartungsleistungen die zu erwartende Energieproduktion der Windenergieanlage (100) für den Vorhersagezeitraum bestimmt wird.

4. Verfahren nach wenigstens einem der vorherigen Ansprüche, wobei

- in dem Leistungsbestimmungsschritt für den Windgeschwindigkeitswert eine Idealleistung bestimmt wird, die die Windenergieanlage (100) bei idealen Randbedingungen und/oder ohne Berücksichtigung thermischer Verluste erzeugen könnte, und
- aus der Idealleistung mittels einer diesem Windgeschwindigkeitswert zugeordneten Anpassungsvorschrift die Erwartungsleistung ermittelt wird, wobei die Anpassungsvorschrift vorzugsweise eine temperaturabhängige Leistungsobergrenze vorgibt, auf die die Idealleistung begrenzt wird, sodass die auf die Leistungsobergrenze begrenzte Idealleistung die Erwartungsleistung bildet.

5. Verfahren nach einem der vorstehenden Ansprüche, wobei aus einer bzw. der Idealleistung und der Erwartungsleistung ein diesem Windgeschwindigkeitswert zugeordneter zu erwartender thermisch bedingter Energieproduktionsverlust bestimmt wird.

6. Verfahren nach wenigstens einem der vorstehenden Ansprüche, wobei zum Ermitteln der Komponententemperatur der wenigstens einen thermisch relevanten Komponenten eine Wärmekapazität und/oder wenigstens ein Wärmewiderstand der Komponente berücksichtigt wird, insbesondere so, dass

- die Komponententemperatur an der wenigstens einen thermisch relevanten Komponente in Abhängigkeit von der Außentemperatur und/oder der Wärmekapazität bestimmt wird.

7. Verfahren nach wenigstens einem der vorherigen Ansprüche, wobei

- für die wenigstens eine thermisch relevante Komponente,

- insbesondere für jede der thermisch relevanten Komponenten,

- jeweils eine temperaturabhängige Abregelungsvorschrift vorgegeben wird, wobei

- jede temperaturabhängige Abregelungsvorschrift jeweils eine von der Komponententemperatur der betreffenden thermisch relevanten Komponente abhängige Vorschrift zum Abregeln der Windenergieanlage (100) angibt.

8. Verfahren nach einem der vorstehenden Ansprüche, wobei

- in Abhängigkeit von der wenigstens einen Komponententemperatur und optional
- in Abhängigkeit von mehreren bzw. den Abregelungsvorschriften,
- wenigstens eine Anpassungsvorschrift ermittelt wird, die eine Vorschrift zum Abregeln der Windenergieanlage (100) angibt.

9. Verfahren nach wenigstens einem der vorstehenden Ansprüche, wobei

- mehrere Leistungsbestimmungsschritte zeitlich hintereinander ausgeführt werden, sodass zu einem aktuellen Leistungsbestimmungsschritt ein vorheriger Leistungsbestimmungsschritt existiert, und
- in dem vorherigen Leistungsbestimmungsschritt oder in Abhängigkeit von dem vorherigen Leistungsbestimmungsschritt, eine bzw. die Anpassungsvorschrift ermittelt und in dem aktuellen Leistungsbestimmungsschritt dazu verwendet wird, für einen aktuellen Windgeschwindigkeitswert eine Idealleistung und davon abhängig und mittels der zuvor ermittelten Anpassungsvorschrift eine Erwartungsleistung zu ermitteln.

10. Verfahren nach wenigstens einem der vorstehenden Ansprüche, wobei, wenn für mehrere thermisch relevante Komponenten festgestellt wird, dass die Windenergieanlage (100) abgeregelt werden soll, ein Abregelungsbetrag derjenigen thermisch relevanten Komponente maßgeblich ist, der zu der stärksten Abregelung der Windenergieanlage (100) führt.

11. Verfahren nach wenigstens einem der vorherigen Ansprüche, wobei die wenigstens eine thermisch relevante Komponente ausgewählt ist aus einer Gruppe von Anlagenkomponenten, die wenigstens umfasst: einen Generator, insbesondere einen Stator und einen Rotor eines Generators, und einen Turm, der wenigstens teilweise aus Stahl gebildet ist.

12. Verfahren nach einem der vorstehenden Ansprüche, wobei

- wenigstens eine thermisch relevante Komponente mit einem aktiven Kühlsystem versehen ist, und
- zur Bestimmung der Komponententemperatur der betreffenden thermisch relevanten Komponente ein Verhalten des aktiven Kühlsystems berücksichtigt wird, wobei insbesondere vorgesehen ist, dass

- das Verfahren zum Bestimmen der zu erwartenden Energieproduktion wenigstens einmal als Verfahren mit aktiver Kühlung und einmal als Verfahren ohne aktive Kühlung durchgeführt wird, wobei
- bei der Durchführung als Verfahren mit Kühlung das aktive Kühlsystem berücksichtigt wird, und
- bei der Durchführung als Verfahren ohne Kühlung das aktive Kühlsystem nicht berücksichtigt wird, und insbesondere
- ein Vergleich der jeweils ermittelten zu erwartenden Energieproduktionen vorgenommen wird.

**Claims**

1. A method for determining the energy production which is to be expected for a wind power installation (100) for a forecast time period, in particular the expected annual energy production of a wind power installation (100), wherein

 - the wind power installation (100) has a plurality of installation components,
 - at least one of the installation components is selected as a thermally relevant component,
 - a plurality of chronologically distributed wind speed values are specified for the forecast time period, and
 - an expected power output level of the wind power installation (100) is determined for one of the wind speed values in a power output level determining step, wherein

  - the expected power output level stipulates an installation power output level which is to be expected as the power output level which is generated by the wind power installation (100) for this wind speed value, and
  - a component temperature which is assigned to this wind speed value is taken into account by the at least one thermally relevant component, and

 - the expected power output level of the wind power installation (100), which is determined for the wind speed value, is used to determine the energy production of the wind power installation (100) which is to be expected for the forecast time period.

2. The method as claimed in claim 1, which comprises the fact that

 - a plurality of chronologically distributed outside temperature values which are respectively assigned to one of the plurality of wind speed values are specified, and
 - in the power output level determining step the expected power output level for the at least one wind speed value is determined using the outside temperature value which is assigned to this wind speed value and the component temperature, assigned to this wind speed value, of the at least one thermally relevant component.

3. The method as claimed in claim 1 or 2, wherein in order to determine the expected energy production over the forecast time period

 - the power output level determining step is repeated successively for all the specified wind speed values, and
 - an expected power output level is respectively determined for each wind speed value, wherein a component temperature which is assigned to the corresponding wind speed value is respectively obtained for each of the wind speed values of at least one thermally relevant component and is taken into account in the determination of the respective expected power output level, and
 - the expected energy production of the wind power installation (100) for the forecast time period is determined from all of the expected power output levels which are obtained in this way.

4. The method as claimed in at least one of the preceding claims, wherein

 - an ideal power output level for which the wind power installation (100) could generate under ideal boundary conditions and/or without taking into account thermal losses is determined in the power output level determining step for the wind speed value, and
 - the expected power output level is obtained from the ideal power output level by means of an adaptation rule which is assigned to this wind speed value, wherein the adaptation rule preferably specifies a temperature-dependent power upper limit to which the ideal power output level is limited, so that the ideal power output level which is limited to the power upper limit forms the expected power output level.

5. The method as claimed in one of the preceding claims, wherein an expected energy production loss which is thermally conditioned and is assigned to this wind speed value is determined from an ideal power output level or the ideal power output level and the expected power output level.

6. The method as claimed in at least one of the preceding claims, wherein in order to obtain the component temperature of the at least one thermally relevant component a thermal capacity and/or at least a thermal resistance of the component is taken into account, in particular in such a way that

- the component temperature of the at least one thermally relevant component is determined in dependence on the outside temperature and/or the thermal capacity.

7. The method as claimed in at least one of the preceding claims, wherein

- for the at least one thermally relevant component,

- in particular for each of the thermally relevant components,

- a temperature-dependent downward control rule is respectively specified, wherein

- each temperature-dependent downward control rule respectively stimulates a rule for performing downward control of the wind power installation (100), which is dependent on the component temperature of the respective thermally relevant component.

8. The method as claimed in one of the preceding claims, wherein

- in dependence on the at least one component temperature and optionally
- in dependence on a plurality of downward control rules or the downward control rules,
- at least one adaptation rule which stipulates a rule for performing downward control of the wind power installation (100) is obtained.

9. The method as claimed in at least one of the preceding claims, wherein

- a plurality of power output level determining steps are executed in chronological succession, so that there is a preceding power output level determining step for a current output level determining step, and
- an adaptation rule, or the adaptation rule, is obtained in the preceding power output level determining step or in dependence on the preceding power output level determining step and is used in the current power output level determining step to obtain an ideal power output level for a current wind speed value, and an expected power output level in dependence thereon and by means of the previously obtained adaptation rule.

10. The method as claimed in at least one of the preceding claims, wherein it is ascertained that downward control of the wind power installation (100) is to be carried out for a plurality of thermally relevant components, a downward control amount which brings about the greatest downward control of that thermally relevant component of the wind power installation (100) is decisive.

11. The method as claimed in at least one of the preceding claims, wherein the at least one thermally relevant component is selected from a group of installation components which comprises at least: a generator, in particular a stator and a rotor of a generator, and a tower which is formed at least partially from steel.

12. The method as claimed in one of the preceding claims, wherein

- at least one thermally relevant component is provided with an active cooling system, and
- in order to determine the component temperature of the respective thermally relevant component, a behavior of the active cooling system is taken into account, wherein there is in particular provision that
- the method for determining the expected energy production is carried out at least once as a method with active cooling and once as a method without active cooling, wherein

- the active cooling system is taken into account in the execution as a method with cooling, and
- the active cooling system is not taken into account in the execution as a method without cooling, and in particular
- a comparison of the respectively obtained expected energy production is made.

**Revendications**

1. Procédé de détermination d'une production d'énergie, attendue pour une période de prévision, d'une éolienne (100), en particulier d'une production annuelle d'énergie attendue d'une éolienne (100), dans lequel

- l'éolienne (100) présente plusieurs composants d'installation,

- au moins un des composants d'installation est choisi en tant que composant important sur le plan thermique,
- plusieurs valeurs de vitesse éolienne réparties dans le temps sont spécifiées pour la période de prévision, et
- une puissance attendue de l'éolienne (100) est déterminée lors d'une étape de détermination de puissance pour une des valeurs de vitesse éolienne, dans lequel

- - la puissance attendue indique une puissance d'installation attendue en tant que puissance produite par l'éolienne (100) pour ladite valeur de vitesse éolienne, et
- - une température de composant associée à ladite valeur de vitesse éolienne est prise en compte par l'au moins un composant important sur le plan thermique, et

- la puissance attendue, déterminée pour la valeur de vitesse éolienne, de l'éolienne (100) est utilisée pour déterminer la production d'énergie, attendue pour la période de prévision, de l'éolienne (100).

2. Procédé selon la revendication 1, qui comprend que

- plusieurs valeurs de température extérieure réparties dans le temps, respectivement associées à une des plusieurs valeurs de vitesse éolienne sont spécifiées sur la période de prévision, et
- la puissance attendue pour l'au moins une valeur de vitesse éolienne est déterminée, lors de l'étape de détermination de puissance, en utilisant la valeur de température extérieure associée à ladite valeur de vitesse éolienne et la température de composant, associée à ladite valeur de vitesse éolienne, de l'au moins un composant important sur le plan thermique.

3. Procédé selon la revendication 1 ou 2, dans lequel pour déterminer la production d'énergie attendue sur la période de prévision,

- l'étape de détermination de puissance est répétée successivement pour toutes les valeurs de vitesse éolienne spécifiées, et ce faisant
- respectivement une puissance attendue est déterminée pour chaque valeur de vitesse éolienne, dans lequel pour chacune des valeurs de vitesse éolienne d'au moins un composant important sur le plan thermique, respectivement une température de composant associée à la valeur correspondante de vitesse éolienne est calculée et est prise en compte lors de la détermination de la puissance attendue respective, et

- la production d'énergie attendue de l'éolienne (100) est déterminée pour la période de prévision à partir de toutes les puissances attendues ainsi calculées.

4. Procédé selon au moins l'une quelconque des revendications précédentes, dans lequel

- lors de l'étape de détermination de puissance est déterminée, pour la valeur de vitesse éolienne, une puissance idéale que l'éolienne (100) pourrait produire dans des conditions marginales idéales et/ou sans prendre en compte des pertes thermiques, et
- la puissance attendue est calculée à partir de la puissance idéale au moyen d'une prescription d'adaptation associée à la valeur de vitesse éolienne, dans lequel la prescription d'adaptation spécifie de préférence une limite supérieure de puissance dépendant de la température, à laquelle la puissance idéale se limite, si bien que la puissance idéale limitée à la limite supérieure de puissance constitue la puissance attendue.

5. Procédé selon l'une quelconque des revendications précédentes, dans lequel une perte de production d'énergie liée sur le plan thermique attendue associée à ladite valeur de vitesse éolienne est déterminée à partir d'une ou de la puissance idéale et de la puissance attendue.

6. Procédé selon au moins l'une quelconque des revendications précédentes, dans lequel une capacité thermique et/ou au moins une résistance thermique du composant sont prises en compte pour calculer la température de composant de l'au moins un composant important sur le plan thermique, en particulier de telle sorte que

- la température de composant sur l'au moins un composant important sur le plan thermique est déterminée en fonction de la température extérieure et/ou de la capacité thermique.

7. Procédé selon au moins l'une quelconque des revendications précédentes, dans lequel

- pour l'au moins un composant important sur le plan thermique
- - en particulier pour chacun des composants importants sur le plan thermique
- respectivement une prescription de régulation dépendant de la température est spécifiée,

dans lequel
- - chaque prescription de régulation dépendant de la température indique respectivement une prescription dépendant de la température de composant du composant important sur le plan thermique concerné pour réguler l'éolienne (100).

**8.** Procédé selon l'une quelconque des revendications précédentes, dans lequel

> - en fonction de l'au moins une température de composant et en option
> - en fonction de plusieurs ou des prescriptions de régulation
> - au moins une prescription d'adaptation est calculée, qui indique une prescription pour réguler l'éolienne (100).

**9.** Procédé selon au moins l'une quelconque des revendications précédentes, dans lequel

> - plusieurs étapes de détermination de puissance sont exécutées les unes après les autres dans le temps si bien qu'une étape de détermination de puissance précédente existe pour une étape de détermination de puissance instantanée, et
> - une ou la prescription d'adaptation est calculée lors de l'étape de détermination de puissance précédente ou en fonction de l'étape de détermination de puissance précédente et est utilisée lors de l'étape de détermination de puissance instantanée pour calculer, pour une valeur de vitesse éolienne instantanée, une puissance idéale et, en fonction de celle-ci et au moyen de la prescription d'adaptation calculée au préalable, une puissance attendue.

**10.** Procédé selon au moins l'une quelconque des revendications précédentes, dans lequel, quand il est constaté pour plusieurs composants importants sur le plan thermique que l'éolienne (100) doit être régulée, une valeur de régulation du composant important sur le plan thermique qui précisément mène à la régulation la plus importante de l'éolienne (100) est essentielle.

**11.** Procédé selon au moins l'une quelconque des revendications précédentes, dans lequel l'au moins un composant important sur le plan thermique est choisi parmi un groupe de composants d'installation, qui comprend au moins : un générateur, en particulier un stator et un rotor d'un générateur, et une tour, qui est formée au moins en partie à partir d'acier.

**12.** Procédé selon l'une quelconque des revendications précédentes, dans lequel

> - au moins un composant important sur le plan thermique est pourvu d'un système de refroidissement actif, et

- pour déterminer la température de composant du composant concerné important sur le plan thermique, un comportement du système de refroidissement actif est pris en compte, dans lequel il est prévu en particulier que
- le procédé est mis en œuvre pour déterminer la production d'énergie attendue au moins une fois en tant que procédé avec refroidissement actif et une fois en tant que procédé sans refroidissement actif, dans lequel
- lors de la mise en œuvre en tant que procédé avec refroidissement, le système de refroidissement actif est pris en compte, et
- lors de la mise en œuvre en tant que procédé sans refroidissement, le système de refroidissement actif n'est pas pris en compte, et en particulier
- une comparaison des productions d'énergie attendues respectivement calculées est réalisée.

Fig. 1

S1

S2

S3

S4

S5

LB

S6

S7

Fig. 2

Fig. 3

EP 3 839 253 B1

Fig. 4

Fig. 5

Fig. 6

Fig. 7

**EP 3 839 253 B1**

**IN DER BESCHREIBUNG AUFGEFÜHRTE DOKUMENTE**

**In der Beschreibung aufgeführte Patentdokumente**

- EP 2267305 A2